# EUROPEAN PATENT SPECIFICATION

(11) **EP 4 649 472 B1**
(45) Date of publication and mention of the grant of the patent: **21.10.2026**
(21) Application number: 24702234.6
(22) Date of filing: 09.01.2024
(51) Int. Cl.: G08B 17/107

(54) **SMOKE DETECTOR AND METHOD FOR SMOKE DETECTION**
RAUCHMELDER UND VERFAHREN ZUR RAUCHDETEKTION
DÉTECTEUR DE FUMÉE ET PROCÉDÉ DE DÉTECTION DE FUMÉE

(30) Priority: 12.01.2023 DE 102023100595
(43) Date of publication of application: 19.11.2025
(73) Proprietor: ams Sensors Germany GmbH, 07745 Jena (DE)
(72) Inventor: GAMPERL, David, 8230 Hartberg (AT); KRUMBEIN, Frank, 99099 Windischholzhausen (DE); JENSEN, Kevin, 07743 Jena (DE)
(74) Representative: Tergau & Walkenhorst Intellectual Property GmbH
(86) International application number: PCT/EP2024/050409
(87) International publication number: WO 2024/149768

(56) References cited:
- US-A1- 2005 057 365
- US-A1- 2011 181 870
- US-A1- 2022 244 160

## Description

### Technical background of the invention

The invention relates to smoke detectors with an emitter and a sensor.

### Background

Detecting and differentiating of smoke types is an important topic in smoke detection devices. Accurate and sensitive sensor response is important because it helps save lives and reduces false alarms that are expensive or endanger lives. Approximately 22 % of deaths are caused by inactive devices or false alarms. The risk of death in a home structure with working smoke alarms is 55 % lower

In general, a known smoke detector or sensor comprises a LED, a photo diode and a chamber. The chamber fixes the diode and receiver and has light traps to prevent direct light beams to the receiver from the internal light source(s) or external interferences.

Smoke is detected if the optical conditions in the smoke chamber are changed. If the LED is in the switched-on status and no smoke (aerosols) is in the chamber, then the diode will get no light if all reflections are suppressed by light traps. But if the LED is switched on and smoke is in the chamber, the diode will receive reflections from the aerosols (it means stray light measurements).

A general behaviour is now that the higher these reflections are, the higher are the counts and the higher the sensitivity and accuracy. Reflections and their sizes are depending on many factors. These are, for example, the Angle between LED and Diode, the type (material - chemical composition, refractive index), size, number of particles, light energy and wavelengths, system speed (frequency) and diode sensitivity and others.

The target of a test should be designed to obtain as much as possible counts per channel from the sensor which represents direct the reflections and not disruptions or deviations. Smoke or the aerosols can be detected as soon as the amount of light reflected exceeds the sensitivity of the sensor. This sensitivity is depending on the used sensor, its setup, and existing disruptions. In other use cases, the sensitivity must be dynamical. As an example, if the sensor should detect very fast smoke in the beginning of fire, the sensor must be very sensitive in the beginning of fire when the aerosols or the clouds are small, few and scattered.

There is an increasing demand for more sensitive sensor systems and for more information such as smoke or no smoke.

Known smoke detection look at blue and IR light via discrete detectors (limited capabilities). Smoke detectors according to prior art perform the wavelength selection on the emitter side. For example, multiple LEDs are used for example blue and IR combined with a discrete photodetector in an optical arrangement, whereby the photodetector detects photons of a broad range of the optical spectrum. More and more detectors and emitters are needed approach standards (up to 3 each for example in the burger test).

The document EP 3 574 530 B1 discloses an arrangement for optical smoke detection according to the two-colour principle, wherein the arrangement comprises a light emitting diode and a photo sensor which is spectrally coordinated therewith. The light emitting diode comprises an LED chip for emitting light in a first wavelength range and a light converter for converting part of the emitted light into light in a second wavelength.

The document US 7,239,387 B2 describes a method for detecting fires according to the scattered light principle, comprising emitting pulsed radiation of first and second wavelengths into a measuring volume, wherein the scattered radiations of the first and second wavelengths are measured on opposite sides of the measuring volume on a same main axis.

The document US 2011/0181870 A1 discloses a particulate detector comprising a radiation source arranged to emit radiation in at least first and second predetermined wavebands towards a sampling region suspected of containing particulates, and a detection element, shielded from the radiation source and arranged to detect radiation from the sampling region at least first and second instances. The radiation source is such that the emissions in the wavebands temporarily overlap. The detector is such that, at the instances at which the radiation is detected, the relative contributions from the emissions in each predetermined waveband are distinguishable, thereby allowing characteristics of the particulates to be determined.

The document US 2022/0244160 A1 describes a particle detector comprising one or more light sources, an optical sensor, and a controller. The one or more light sources are collectively operable to simultaneously produce at least two wavelength ranges of emitted light. The optical sensor is configured to sense light of the at least two wavelength ranges emitted by the one or more light sources and to distinguish each range. The controller is configured to detect particles based on the light sensed by the optical sensor.

The document US 2005/0057365 A1 discloses a smoke detector including a smoke detection chamber containing a white light LED and a light detector. The light detector detects light within at least two distinct optical wavelength bands and generates respective signals indicative of the intensities of the detected light. An analyzer determines, based on the measured light intensities of the different wavelength bands, whether a dangerous smoke/fire condition is present.

### Summary

The object of the invention is therefore to provide a smoke detector with improved smoke type detection capabilities. Another object is to provide a corresponding method for smoke detection.

With respect to the smoke detector, the object is solved by a smoke detector according to claim 1. According to the invention, the smoke detector comprises a detector chamber, a number of emitters and at least one optical sensor, whereby the sensor is built as a multi-spectral optical sensor.

Preferred embodiments are subject of the dependent claims.

The invention is based on the consideration that not only the detection of the presence of smoke in general, but also the detection of different kinds of smoke is desirable and is part of modern demand on smoke detectors. In known smoke detectors, multiple different wavelength LEDs would be needed causing an extremely difficult optical smoke chamber design.

Applicant has found these demands can be met and conducted efficiently with a multi-channel broadband detector, i.e., by performing the wavelength selection on the detector side. In this way, the smoke detection can be conducted with only one broadband source.

The proposed detector allows reducing the required parts (1 detector, 1 or 2 emitters). The spectral footprint allows to distinguish between different smoke types and reduce false alarms (particle detection + spectral footprint)
According to the invention, the multi-spectral sensor comprises a plurality of spectral filters for spectral channels and at least one broadband channel.

According to the invention, the channels are realized by photodiodes arranged in a photodiode array. Preferably, a channel further comprises an electronic circuit, a storage facility, and a digital interface. The photodiode array comprises a plurality of photodiodes. The electronic circuit is configured to convert the analog signal generated by the respective photodiode into a digital signal. To this end, it comprises advantageously a plurality of analog to digital converters (ADCs). The storage facility on a chip is configured to buffer measurement data and is prefer or more general RAM. The digital interface is configured to enable an external host to read-out the measurement data. It is preferably realized as an I2C interface. All these components are advantageously integrated into a single CMOS device.

The filter is preferably deposited directly onto the CMOS device (in that case directly onto the PD Array) after the CMOS has been processed. This enables every photodiode (PD) to see only portion of the light. The technology used is interference filter technology.

According to the invention, the photodiodes are arranged as a photodiode array. In this way, a very compact design of the sensor and of the smoke detector is possible. For each channel, preferably a pixel array of 3x3 or 5x5 pixels is provided.

The at least one broadband channel preferably covers light in the wavelength region between 350 nm and 1000 nm.

According to the invention, the smoke detector comprises between 4 and 20 spectral channels.

The number of emitters preferably comprise a broad-band light source. As the distinction of different smoke types is performed on the sensor side, a broad-band light source can be used to provide a broad wavelength range which covers all frequency bands employed for smoke identification. The broadband light source can be, for instance, a white LED, an RGB LED inside a single package, a white LED combined with a near-infrared LED inside the system, or a broadband emitter such as an incandescent light source.

The broad-band light source advantageously emits light in the wavelength range between 350 nm and 1000 nm, especially between 350 nm and 700 nm.

The number of emitters preferably comprises at least one narrow-band light source.

The narrow-band light source advantageously emits in the UV and/or IR or NIR range.

In a preferred embodiment, for each spectral range two emitters are arranged in the detector chamber. For example, in the detector chamber two broad-band emitters / light sources and two narrow-band IR emitters / light sources are arranged.

Advantageously, the emitters are arranged symmetrically in the detector chamber, which preferably means that with respect to a symmetry axis in the detector chamber, the respective emitters are arranged symmetrically on both sides. In this way, independently of the direction into which the smoke enters the detector chamber, scattered light can be detected. Additionally, by this arrangement the sensitivity is increased, as more light is entering the chamber, hence a smaller smoke concentration is needed for detection.

In a preferred embodiment, the smoke detector comprises data registers for the respective spectral channels. Preferably, for each measurement (of which the time span is adjustable, it can for example lie between 50-180 ms, a raw-count value is stored in the respective data register of the storage (for instance the FIFO). Once the storage space is full, a host (MCU) is contacted via an interrupt in order to fetch the data.

In a preferred embodiment, the smoke detector is configured to provide a control signal for the respective emitter, especially for setting the intensity of the emitter. In this way, depending on the sensitivity of the sensor, especially of the photodiodes, the intensity of the respective emitter can be set.

With respect to the method, the object stated above is solved my method according to claim 14. Accordingly, by at least one broadband emitter and/or a number of narrow range emitters light is emitted into a detector chamber, and whereby light scattered by smoke particles is sensed by a multi-spectral optical sensor.

The advantages are especially as follows. The usage of multispectral sensor combined with broadband light sources enables precise selective smoke type detection, e.g., to distinguish flaming wood from flaming plastic from water vapor from cooking smoke. Also, cigarette smoke, e-cigarette smoke and vaporizer smoke can be distinguished. Production-type smoke effects as for example saw dust can be identified.

Interference filter technology allows to deposit multiple spectral filters on a silicon photodetector enabling multispectral sensors at a very low cost.

### Brief Description of the Preferred Embodiments

A preferred embodiment of the invention is described in connection with a drawing. In this drawing,
- FIG. 1: shows a smoke detector according to prior art;
- FIG. 2: shows a smoke detector according to the invention in a preferred embodiment;
- FIG. 3: shows a detector chamber of the smoke detector according to FIG. 2;
- FIG. 4: shows an electronic layout of a smoke detector in a preferred embodiment;
- FIG. 5: shows a further detailed electronic layout of components of the smoke detector according to FIG. 4;
- FIG. 6: shows sample curves of detected light in a smoke detector;
- FIG. 7: shows sample curves for different smoke types in a wavelength range from 400 nm to 750 nm;
- FIG. 8: shows sample curves for different smoke types in a wavelength range from 750 nm to 950 nm; and
- FIG. 9: shows a photo diode array of a multi-spectral sensor of smoke detector.

Identical parts are labelled by the same reference signs.

### Detailed Description of the Preferred Embodiments

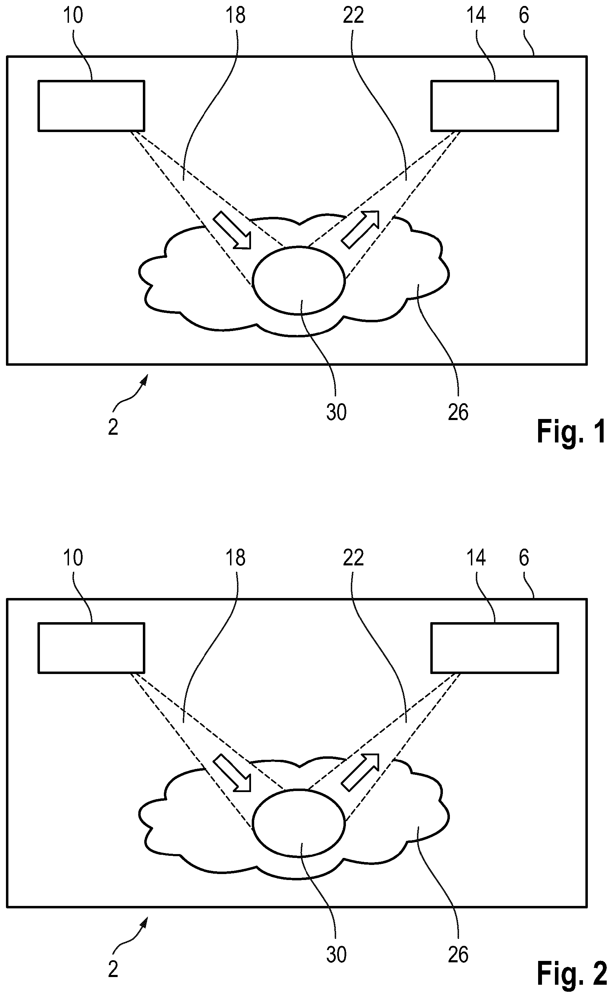

In FIG. 1, a smoke detector 2 according to prior art is shown. The smoke detector 2 comprises a detector chamber 6 in which an emitter 10 and a sensor 14 / detector are arranged. Also shown are smoke 26 and a very enlarged smoke particle 30.

The emitter 10 emits light 18 which is reflected by smoke particles 30 into the sensor 14. The emitter 10 is built as one or more narrow-range light sources. The sensor 14 is built as one or more detector elements with matching corresponding wavelength sensitivity with respect to the wavelength(s) of the emitter 10. For instance, if an IR emitter 10 is present, a corresponding IR sensor 14 is present. If additionally, a blue emitter 10 is present, also a sensor 14 for blue radiation is present.

In FIG. 2, a smoke detector 2 according to the invention in a preferred embodiment is shown. The emitter 10 is built as a broad-band light source. The sensor 14 is built as multispectral optical sensor.

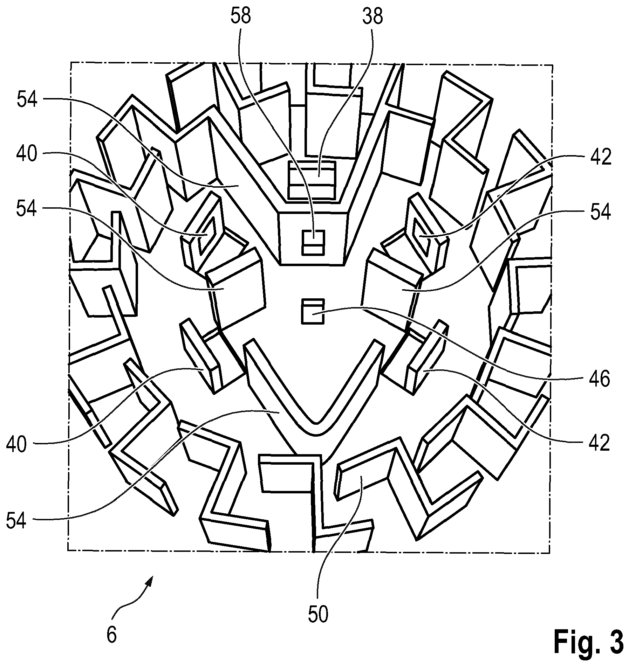

In FIG. 3, a detector chamber 6 of a smoke detector 2 in a preferred embodiment is shown. In the detector chamber 6, the multi-spectral optical sensor 38 is arranged. Two visible light emitters 40 and two IR emitters 42 are arranged symmetrically in the detector chamber 6. The emitters 40, 42 are arranged to emit light into a centre 46 of the detector chamber 6. The sensor 38 is arranged to detect light rays which are emitted from emitters 40, 42 and are reflected in the region of the centre 46 by smoke particles.

In the periphery of the detector chamber 6, several z-shaped walls 50 are arranged which prevent ambient light or other light from the outside to enter the centre 46. Further walls are 54 are arranged in the detector chamber 6 which prevents light from outside to reach the centre 46. In one of these walls 54 arranged in front of sensor 38, an opening 58 is arranged allowing light to reach the sensor 38.

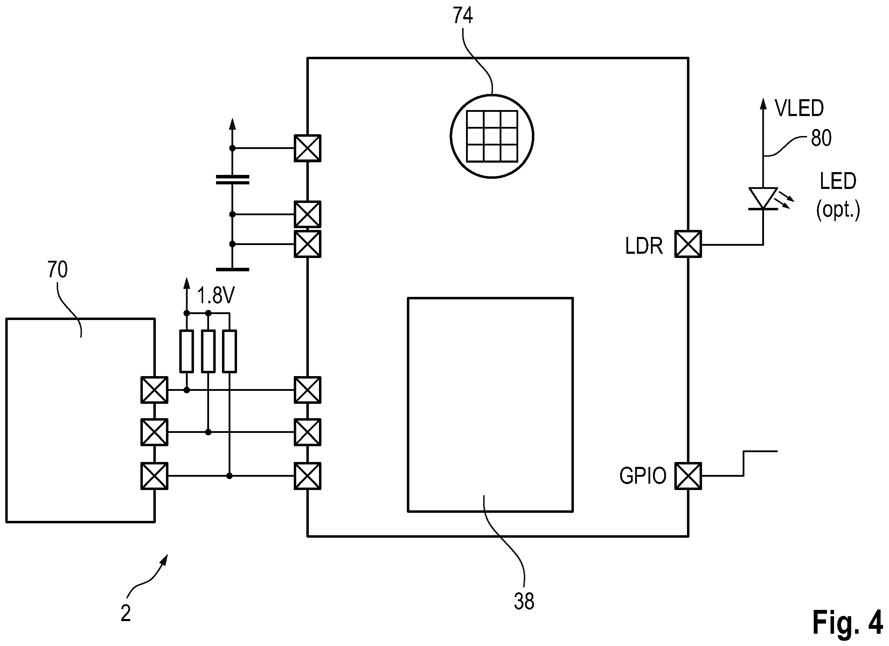

In FIG. 4, an electronic layout of the smoke detector 2 is shown. A microcontroller unit 70 (MCU) is provided for operating the multi-spectral optical sensor 38 which comprises a photodiode array 74. The microcontroller unit 70 is also configured to provide a control signal 80 for at least one emitter 10.

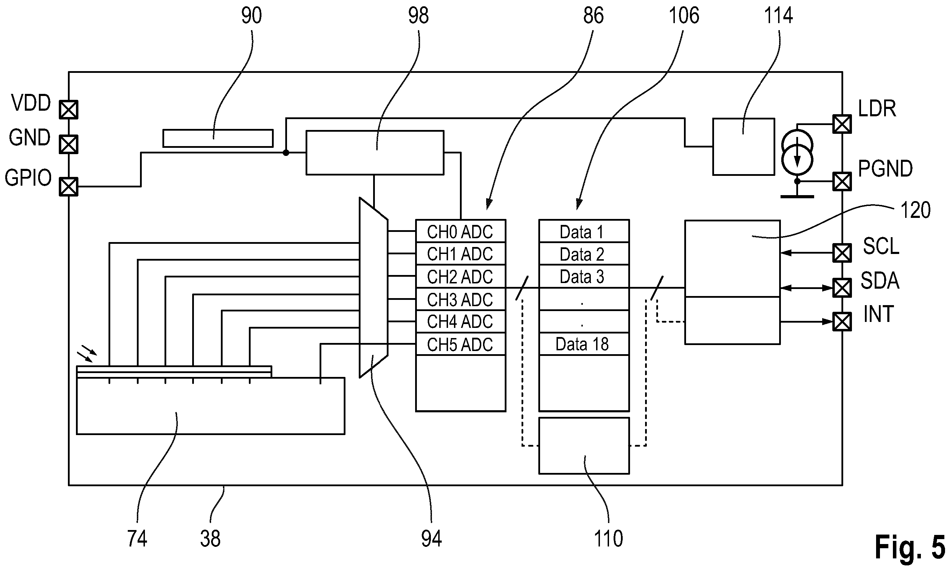

In FIG. 5, the sensor 38 is shown in more detail. In a preferred embodiment, the sensor 38 comprises 12 spectral channels which cover the wavelength range from 400 nm to 1000 nm. The sensor 38 comprises 6 spectral channels with corresponding ADCs 86 (analog-digital converters) within the wavelength range 400 nm - 1000 nm.

There are furthermore 2 additional general-purpose channels (clear, flicker detection). The sensor 38 comprises a sync input 90, a sample multiplexer or SMUX 94, and an automatic measurement engine 98. The automatic measurement engine 98 is a circuit which automatically switches the photodiodes onto the ADCs 86. This is used as there are 6 ADCs 86, but 25 photodiodes. The switching is therefore performed automatically. The measurement data is then transferred into the storage, especially the FIFO.

The sensor 38 comprises data register 106. For each of the channels 86, 102, a respective 16-bit data register is provided.

The sensor 38 comprises a 256 FIFO (first in first out) storage 110.

The photodiode array 76 comprises a 5x5 PD (photo diode) in chip IF array and a flicker PD.

The sensor 38 is built to drive an emitter 10 which is built as at least one LED. To this end, the sensor 38 comprises an LED driver 114.

The sensor 38 further comprises an I2C (inter-integrated circuit) register 120, preferably with 1 MHz, and an interrupt handling 124. The I2C is an interface enabling the host controller to read out the data. It comprises a clock and a data line SCL/SDA and comprises a specific protocol.

The sensor 38 has an improved outer band suppression of spectral filters and an automatic ADC re-configuration for multi-channel read-out. It comprises an improved flicker detection (continuous flicker detection), an increased flicker sensitivity (2nd PD) and a decreased I2C Interface loading (8-bit mode).

The dimensions of the sensor 38 are in a preferred example 3.1 mm x 2 mm x 1 mm.

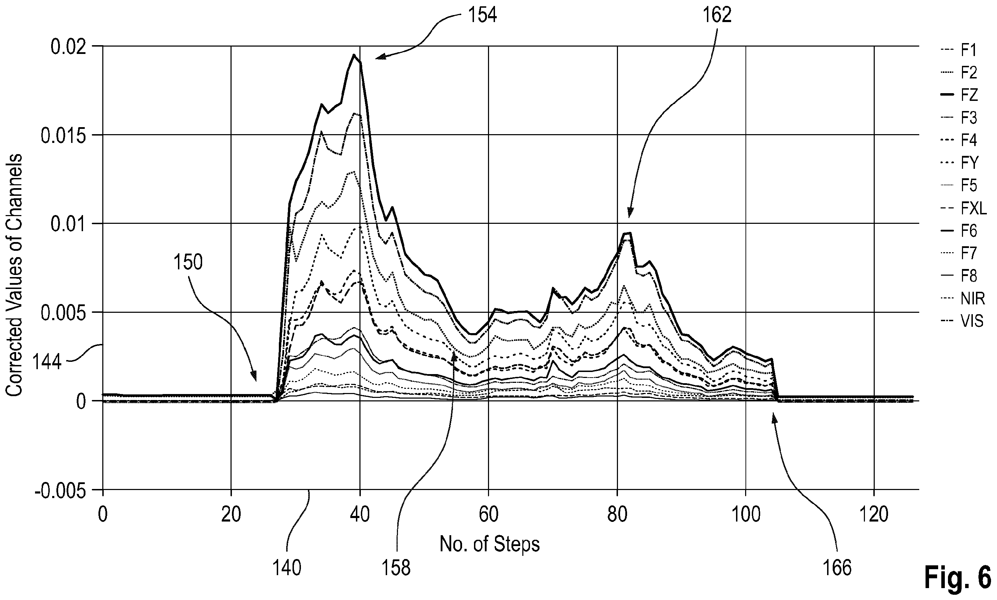

In FIG. 6, in a diagram on the x-axis 140 a number of measurement samples (1 sample per 180 ms) and on the y-axis 144 spectral raw data as an example are plotted. The number of samples on the x-axis 140 is proportional to the time of the data acquisition experiment shown. The different curves correspond to various photo diodes which each have their specific wavelength band in which they are sensitive.

At a first point in time 150, a smoke source is activated or applied, leading to an overall increase of counts in the curves. At a second point in time 154, the smoke source is removed again. At a third point in time 158, the smoke is source is applied again. At a fourth point in time 162, the smoke source is applied again, and at a fifth point in time 166, the remaining smoke is removed from the smoke chamber by airflow.

As can be seen, essentially in all channels a response to the smoke entering the smoke chamber is seen. The different channels react differently to the smoke in the absolute numbers of counts and in the shape of the respective curves. Already from this figure it can be inferred that by considering the information of the channels and analyzing their behaviour, not only the overall presence of some, but the specific type of smoke can be detected.

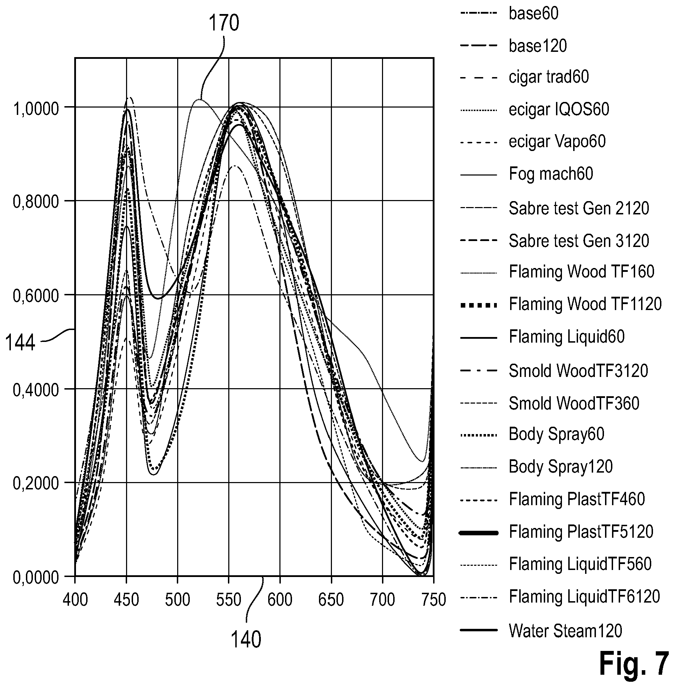

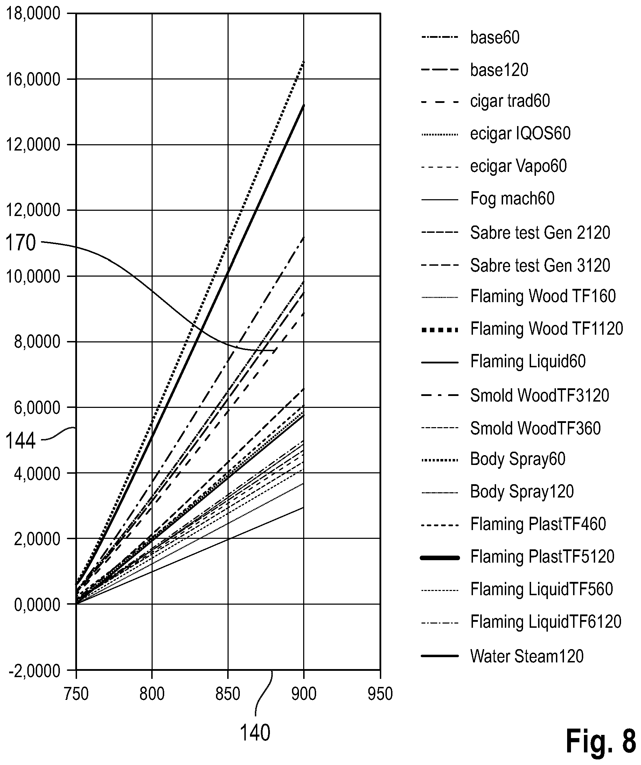

In FIG. 7, in a diagram on the x-axis 140 the wavelength and on the y-axis a relative count number is plotted. The various curves correspond to different smoke sources. For example, a curve 170 corresponds to smoke from an e-cigar. In FIG. 8, the corresponding curves are shown in the wavelength range 750 nm - 950 nm, i.e., in the NIR range.

From these two FIGs, it can be inferred that different types of smoke have different characteristics / curves in various wavelength regions. In a smoke detector 2 as proposed by the invention, which senses scattered light in a broad range of wavelength, the specific type of smoke can be identified. In this way, steam or cigar or e-cigar smoke can be discriminated from other smoke types which originate from a serious fire.

An example setup for the channels of the multi-spectral optical sensor 38 is shown in the following table which in the first row ("C") shows channel labels, in the second row ("f") shows the corresponding frequency of the respective channel in the unit of nanometres, and in the third row shows the full width at half maximum ("FWHM") in the unit of nanometres.

| C | F1 | F2 | FZ | F3 | F4 | FY | F5 | FXL | F6 | F7 | F8 | NIR |
|---|---|---|---|---|---|---|---|---|---|---|---|---|
| f [nm] | 400 | 425 | 440 | 473 | 514 | 555 | 547 | 595 | 635 | 685 | 745 | 850 |
| FWHM [nm] | 30 | 22 | 55 | 30 | 40 | 100 | 35 | 80 | 50 | 55 | 60 | 54 |

The sensor configuration comprises the 12 spectral filters shown in the table and 2 general purpose broadband channels. The two broadband channels (clear and flicker) do not comprise a filter and can be used for calibration as they sense the spectrum between 400-700 nm.

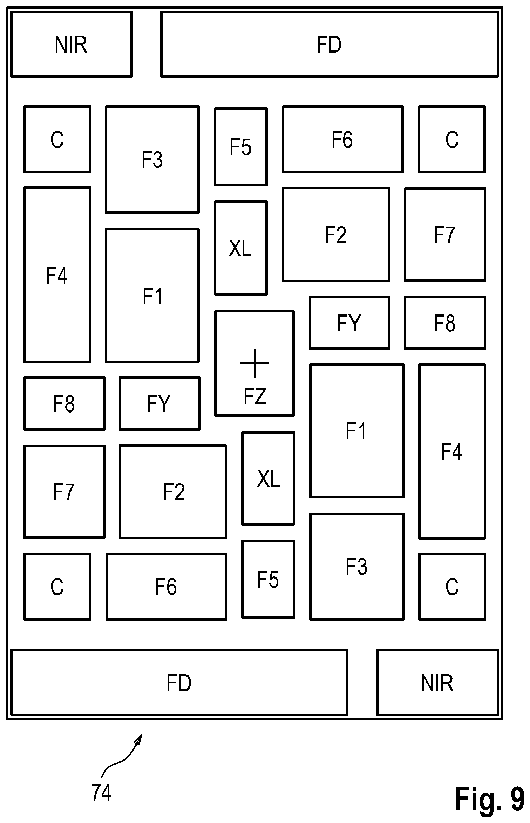

In FIG. 9, an example configuration of a photodiode array 7 of the multi-spectral optical sensor 38 is shown. The spectral sensors of the table above are shown the labels of the tables as well as the photodiodes labelled with "FD" and "C". The "FD" channel is a broadband channel in the visible light. The "C" channel is a clear channel.

## Claims

1. Smoke detector (2), comprising a detector chamber (6), a number of emitters (10) and at least one optical sensor (14),
**characterized in that**
said sensor (14) is built as a multi-spectral optical sensor (38), whereby said multi-spectral sensor (38) comprises a plurality of spectral filters for spectral channels (86) and at least one broadband channel (86), and whereby said channels (86) are realized by photodiodes, and whereby said photodiodes are arranged as a photodiode array (74), whereby said smoke detector (2) comprises between 4 and 20 spectral channels (86).

2. Smoke detector (2) according to claim 1, whereby said at least one broadband channel covers light in the wavelength region between 350 nm and 1000 nm.

3. Smoke detector (2) according to one of the previous claims, whereby said number of emitters (10) comprise a broad-band light source (40).

4. Smoke detector (2) according to claim 3, whereby said broad-band light source (40) emits light in the wavelength range between 350 nm and 1000 nm, especially between 350 nm and 700 nm.

5. Smoke detector (2) according to one of the previous claims, whereby said number of emitters (10) comprise at least one narrow-band light source (42).

6. Smoke detector (2) according to claim 5, whereby said narrow-band light source (42) emits in the UV and/or NIR range.

7. Smoke detector (2) according to one of the previous claims, whereby for each spectral range two emitters (10) are arranged in the detector chamber (6).

8. Smoke detector (2) according to one of the previous claims, comprising data registers (106) for the respective spectral channels (86).

9. Smoke detector (2) according to one of the previous claims, which is configured to provide a control signal (80) for the respective emitter (10).

## Patentansprüche

1. Rauchmelder (2), umfassend eine Melderkammer (6), eine Anzahl Emitter (10) und mindestens einen optischen Sensor (14),
**dadurch gekennzeichnet, dass**
der Sensor (14) als ein multispektraler optischer Sensor (38) ausgebildet ist, wobei der multispektrale Sensor (38) eine Vielzahl von Spektralfiltern für Spektralkanäle (86) und mindestens einen Breitbandkanal (86) umfasst und wobei die Kanäle (86) durch Fotodioden realisiert sind und wobei die Fotodioden als Fotodioden-Array (74) angeordnet sind, wobei der Rauchmelder (2) zwischen 4 und 20 Spektralkanäle (86) umfasst.

2. Rauchmelder (2) nach Anspruch 1, wobei der mindestens eine Breitbandkanal Licht im Wellenlängenbereich zwischen 350 nm und 1000 nm abdeckt.

3. Rauchmelder (2) nach einem der vorhergehenden Ansprüche, wobei die Anzahl Emitter (10) eine Breitbandlichtquelle (40) umfasst.

4. Rauchmelder (2) nach Anspruch 3, wobei die Breitbandlichtquelle (40) Licht im Wellenlängenbereich zwischen 350 nm und 1000 nm, insbesondere zwischen 350 nm und 700 nm, emittiert.

5. Rauchmelder (2) nach einem der vorhergehenden Ansprüche, wobei die Anzahl Emitter (10) mindestens eine Schmalbandlichtquelle (42) umfasst.

6. Rauchmelder (2) nach Anspruch 5, wobei die Schmalbandlichtquelle (42) im UV- und/oder NIR-Bereich emittiert.

7. Rauchmelder (2) nach einem der vorhergehenden Ansprüche, wobei für jeden Spektralbereich zwei Emitter (10) in der Melderkammer (6) angeordnet sind.

8. Rauchmelder (2) nach einem der vorhergehenden Ansprüche, umfassend Datenregister (106) für die jeweiligen Spektralkanäle (86).

9. Rauchmelder (2) nach einem der vorhergehenden Ansprüche, welcher eingerichtet ist, um ein Steuersignal (80) für den jeweiligen Emitter (10) bereitzustellen.

## Revendications

1. Détecteur de fumée (2), comprenant une chambre de détecteur (6), un certain nombre d'émetteurs (10) et au moins un capteur optique (14),
**caractérisé en ce que**
ledit capteur (14) est construit comme un capteur optique multispectral (38), dans lequel ledit capteur multispectral (38) comprend une pluralité de filtres spectraux pour les canaux spectraux (86) et au moins un canal à large bande (86), dans lequel lesdits canaux (86) sont réalisés par des photodiodes, dans lequel lesdites photodiodes sont agencées pour former un réseau de photodiodes (74), et dans lequel ledit détecteur de fumée (2) comprend entre 4 et 20 canaux spectraux (86).

2. Détecteur de fumée (2) selon la revendication 1, dans lequel ledit au moins un canal à large bande couvre la lumière dans la région de longueur d'onde comprise entre 350 nm et 1000 nm.

3. Détecteur de fumée (2) selon l'une des revendications précédentes, dans lequel ledit nombre d'émetteurs (10) comprend une source de lumière à large bande (40).

4. Détecteur de fumée (2) selon la revendication 3, dans lequel ladite source de lumière à large bande (40) émet de la lumière dans la plage de longueurs d'onde comprise entre 350 nm et 1000 nm, en particulier entre 350 nm et 700 nm.

5. Détecteur de fumée (2) selon l'une des revendications précédentes, dans lequel ledit nombre d'émetteurs (10) comprend au moins une source de lumière à bande étroite (42).

6. Détecteur de fumée (2) selon la revendication 5, dans lequel ladite source de lumière à bande étroite (42) émet dans la plage de rayonnement ultraviolet, UV, et/ou la plage de rayonnement infrarouge proche, PIR.

7. Détecteur de fumée (2) selon l'une des revendications précédentes, dans lequel, pour chaque plage spectrale, deux émetteurs (10) sont agencés dans la chambre de détecteur (6).

8. Détecteur de fumée (2) selon l'une des revendications précédentes, comprenant des registres de données (106) pour les canaux spectraux respectifs (86).

9. Détecteur de fumée (2) selon l'une des revendications précédentes, configuré pour fournir un signal de contrôle (80) pour l'émetteur respectif (10).
